# EUROPEAN PATENT SPECIFICATION

(11) **EP 3 583 834 B1**
(45) Date of publication and mention of the grant of the patent: **30.12.2020**
(21) Application number: 19174034.9
(22) Date of filing: 13.05.2019
(51) Int. Cl.: A01D 34/68

(54) **HUB BLADE ASSEMBLY FOR LAWNMOWER PROVIDED WITH SAFETY SYSTEM**
NABENKLINGENANORDNUNG FÜR RASENMÄHER MIT SICHERHEITSSYSTEM
ENSEMBLE DE PALE DE MOYEU POUR TONDEUSE À GAZON COMPORTANT UN SYSTÈME DE SÉCURITÉ

(30) Priority: 15.05.2018 IT 201800005399
(43) Date of publication of application: 25.12.2019
(73) Proprietor: Stiga S.p.A. in breve anche St. S.p.A., 31033 Castelfranco Veneto (TV) (IT)
(72) Inventor: VILLANOVA, Mr. Marco, 31020 SERNAGLIA DELLA BATTAGLIA TV (IT)
(74) Representative: Mittler, Andrea

(56) References cited:
- US-A- 2 978 858
- US-A- 3 252 304
- US-A- 5 581 985

## Description

The present invention relates to a hub blade assembly for lawnmower provided with a safety system in case of impact of the blade.

The blade in lawnmowers currently on the market is connected to the drive shaft by a hub comprising a piece made of plastic or aluminum.

There are two protruding pins in the area of the blade resting on the hub, sideways to the central hole for fastening the blade, which pins are inserted in two holes in the blade.

The two protruding pins break in case of impact of the blade against a solid body, e.g. a culvert, sidewalk, rock or the like.

The impact force is only partially unloaded onto the two pins; the hub disadvantageously breaks and is to be replaced.

The damage may be even more significant. Indeed, the two pins often do not promptly break and therefore the impact force induces the bending of the drive shaft, thus irreparably damaging the motor and therefore the lawnmower.

Safety systems are known wherein elastic means absorb impacts against also very heavy solid bodies.

US-2978858 describes a hub blade assembly wherein the hub is provided with blind holes able to house springs and balls. The balls are able to reversibly engage in holes of the blade.

The assembly occurs by inserting the springs and the balls into the respective blind holes and then partially closing the holes by bending the openings inwards so that the balls may not exit from the holes. The springs push the balls towards the openings so that the balls may protrude from the openings but without exiting from the holes.

Once the blade is fastened to the drive shaft with the balls reversibly engaged in the holes of the blade, the balls are pushed into the holes in case of impact of the blade with an external solid body, e.g. a stone, thus releasing the blade from the hub: the energy of the impact is completely absorbed by the springs without damaging the hub, or even more, the drive shaft.

The technical solution described in US-2978858 allows eliminating the problem of the impacts but it is difficult to realize and is subject to wear which may not be limited by replacing the components involved by said wear: the balls and the springs may not be replaced since the openings of the hub are closed due to bending of the material.

Moreover, the efficacy of the bending is entrusted to the operator's skills.

US-3252304 discloses a hub blade assembly for lawnmower provided with a hub which comprises lateral holes housing closing means.

US-5581985 discloses a hub blade assembly for lawnmower provided with a hub which comprises lateral holes reversibly housing closing means.

It is the object of the present invention to realize a hub blade assembly for a lawnmower provided with a safety system in case of impact with an external body.

It is a further object of the present invention that said safety system uses easily replaceable components.

It is a still further object of the present invention that the assembly of the safety system is easy and quick, limiting the number of components used.

According to the invention, said and further objects are achieved with a hub blade assembly for a lawnmower as disclosed in claim 1.

Advantageously the blade is reversibly associable with the hub and the connecting means are replaceable.

As the closing means comprise a hollow cylinder, the spring and the ball are assembled in the hollow cylinder prior to the coupling with the lateral through hole, thus standardizing the preloading of the spring.

These and other features of the present invention will become more apparent from the following detailed description of a practical embodiment thereof, shown by way of non-limiting example in the accompanying drawings, in which:
figure 1 shows a exploded perspective view of a hub blade assembly, according to prior art;
figure 2 shows a top plan view of the hub blade assembly;
figure 3 shows a front view of the hub blade assembly;
figure 4 shows a sectional view according to line IV-IV of figure 2;
figure 5 shows a sectional view similar to the one of figure 4, without the blade;
figure 6 shows an exploded perspective exploded view of a hub blade assembly, according to the present invention;
figure 7 shows a sectional view of the hub blade assembly of figure 6, similar to the one of figure 4;
figure 8 shows a sectional view of the hub blade assembly of figure 6, similar to the one of figure 5.

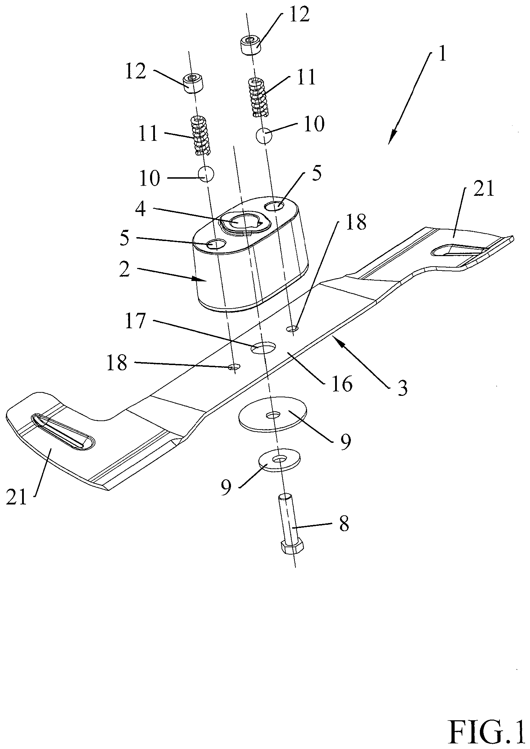

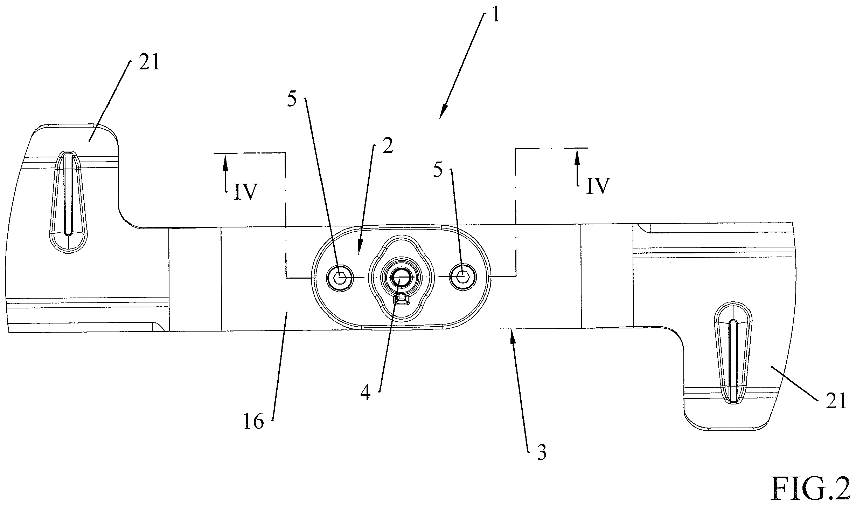

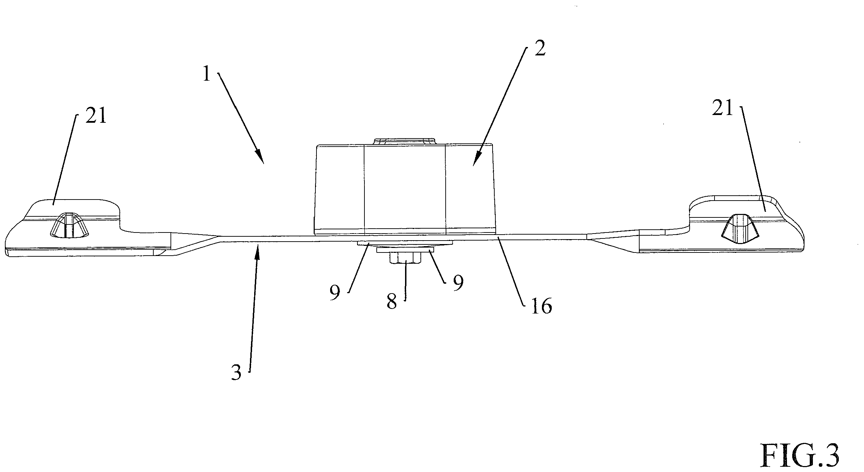

A lawnmower (not shown in the drawings) is provided with a hub blade assembly 1 comprising a hub 2, a blade 3 and connecting means for reversibly connecting the blade 3 to the hub 2 (figures 1 to 3).

The hub 2 comprises a central through hole 4 and two lateral through holes 5.

The central through hole 4 is formed by an upper portion 6 and a lower portion 7.

The lower portion 7 is threaded and is able to be coupled with a screw 8 for fastening the blade 3. Washers 9 mediate the contact of the head of the screw 8 with the blade 3.

The upper portion 6 of the central through hole 4 is able to be coupled with a drive shaft (not shown).

The connecting means comprise two balls 10, two springs 11 and two dowels 12.

Each lateral through hole 5 is able to house a dowel 12, a spring 11 and a ball 10.

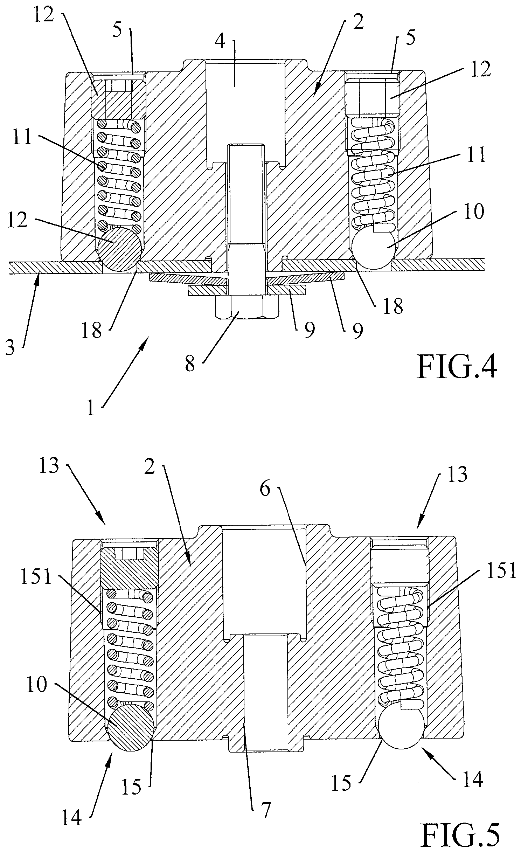

In greater detail (figures 4, 5), each lateral through hole 5 is provided with an upper opening 13 and a lower opening 14. The upper opening 13 is wider than the lower opening 14.

The ball 10 may slide in each lateral through hole 5 up to the lower opening 14 which comprises a narrowing 15 which does not allow the ball 10 to exit through the lower opening 14.

The ball 10 may only protrude from the lower opening 14.

Each lateral through hole 5 comprises a threaded upper portion 151 in which the dowel 12, which is externally threaded, engages. The dowel 12 is able to reversibly close the lateral through hole 5.

The dowel 12, which is engaged with the threading of the lateral through hole 5, is able to reversibly close the lateral through hole 5, thus creating a stop for the spring 11 which pushes the ball 10 towards the lower opening 14.

The blade 3 comprises two lateral cutting portions 21 and a central connection portion 16 which is provided with a central hole 17 and two lateral holes 18.

The screw 8 engages in the central hole 17, while the balls 10 reversibly engage in the lateral holes 18.

Alternatively the hub 2 may be provided with more than two lateral through holes 5 for respective connecting means (balls 10, springs 11 and dowels 12). Accordingly the blade 3 may comprise more than two lateral holes 18 for respective balls 10.

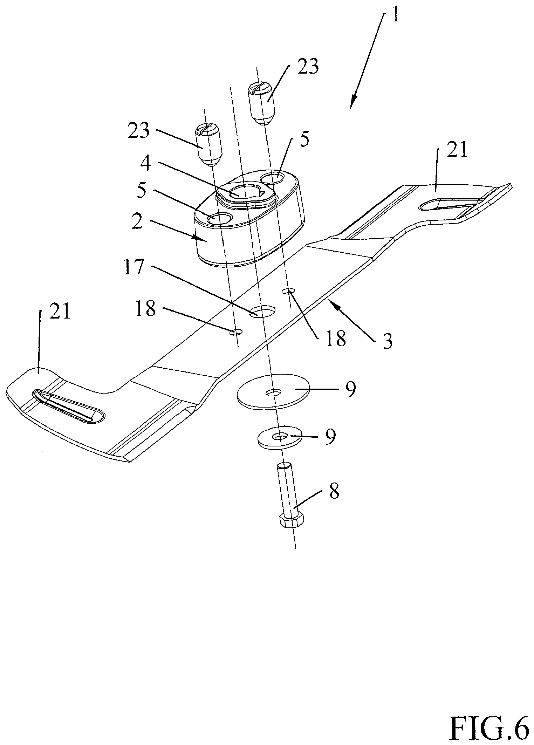

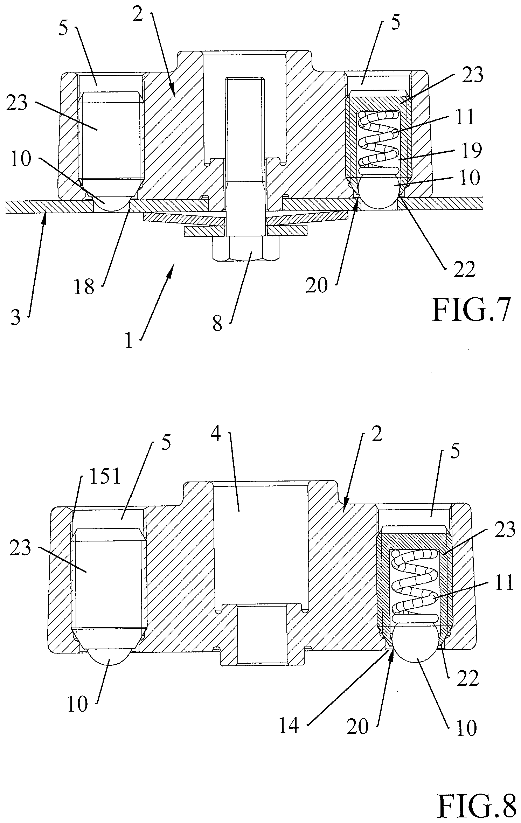

In the hub blade assembly shown in figures 1 to 5, the dowel 12 has the shape of an externally threaded solid cylindrical body. In the embodiment of the present invention a hollow cylinder 23, in which a closed cavity 19 houses both the spring 11 and the ball 10, is (figures 6 to 8) provided in place of the dowel 12 as closing means of the lateral through hole 5.

The cavity 19 has an opening 20 with a narrowing 22 which does not allow the ball 10 to exit, rather only the protrusion thereof: accordingly, the ball 10 and the spring 11 are irreversibly contained in the closed cavity 19.

The hollow cylinder 23 is externally threaded so as to engage in the threading of the lateral through hole 5.

The assembly is operatively very simple.

With reference to the first example of the closing means of the lateral through hole 5 (i.e. the dowel 12), the ball 10 and the spring 11 are inserted into the respective lateral through holes 5.

The dowel 12 is then screwed in the lateral through hole 5 so as to close it and preload the spring 11 in compression: the ball 10 abuts against the narrowing 15 of the opening 14, pushed by the spring 11.

The compression force of the spring 11 is adjustable by differently screwing the dowel 12; the more the dowel 12 is inside the lateral through hole 5, the greater is the compression force, and therefore the thrust, on the ball 10.

The blade 3 is thus associated with the hub 2 by the screw 8, thus ensuring to couple the balls 10 with the holes 18 of the blade 3.

If the blade 3 knocks against a solid body in use, the ball 10 is pushed into the lateral through hole 5 according to the impact force transmitted from the solid body to the ball 10: if said impact force is less than the compression force of spring 11, the blade 3 remains restrained to the hub 2, otherwise the ball 10 moves into the lateral through hole 5, thus being disengaged from the hole 18.

The hub 3 turns with respect to the blade 2 in this latter circumstance, i.e. in case of impact against a heavy and resistant solid body.

The holes 18 may advantageously be automatically realigned with the balls 10, thus restoring the engagement of the blade 2 with the hub 3 once the solid body obstacle is removed.

The blade 2 is not damaged, nor are the hub 3, the connecting means 10-12 and the drive shaft.

However, the replacement of the balls 10 and/or of the springs 11 may become necessary due to wear: the spring 11 and the ball 10 may be easily removed by unscrewing the dowel 12.

The use of the hollow cylinder 23 according to the present invention in place of the dowel 12 allows the connecting means to be assembled prior to the coupling with the lateral through hole 5, thus speeding up the assembly step. In case of wear, the whole assembly formed by the hollow cylinder 23, the spring 11 and the ball 10 requires replacing. However, this is not a significant problem considering the quite contained cost of said components.

However, the operator advantageously has less components to handle by using the hollow cylinder 23, thus making assembly simpler and quicker. The compression force of the spring 11 is predefined, thus standardizing the reaction of the hub blade assembly 1 to the impact with a solid body.

An operator could indeed overload the spring 11 by using the dowel 12, thus making blade 2 substantially integral with the hub 3. Otherwise, loading the spring 11 too little could result in a continuous uncoupling of the blade 2 from the hub 3, thus forcing the operator to make continues machine stops.

Consequently, the use of the dowel 12 or of the hollow cylinder 23 allows the above-mentioned technical problem to be resolved, thus allowing the skilled person the freedom to select according to his/her needs.

## Claims

1. Hub blade assembly (1) for lawnmower, comprising a hub (2), a blade (3) and connecting means for reversibly connecting the blade (3) to the hub (2) which comprises at least one central through hole (4) and at least two lateral holes (5), the connecting means comprise balls (10) and springs (11) able to engage in said lateral holes (5) and a screw (8) able to engage in said central through hole (4), said balls (10) being able to protrude from a lower opening (14) of the respective lateral hole (5) to reversibly engage in holes (18) of the blade (3),
said at least two lateral holes (5) are through holes,
the connecting means comprise closing means (23) of the lateral holes (5),
each lateral hole (5) is able to reversibly housing the closing means (23), a spring (11) and a ball (10),
**characterized in that** the closing means comprise a hollow cylinder (23) in which a closed cavity (19) is able to irreversibly house both the spring (11) and the ball (10), said closed cavity (19) having an opening (20) with a narrowing (22) able to prevent the exit of the ball (10) from the closed cavity (19) allowing only the protrusion of the ball (10).

2. Hub blade assembly (1) according to claim 1, **characterized in that** each lateral hole (5) comprises a threaded upper portion (151) in which the hollow cylinder (23), which is externally threaded, engages.

3. Lawnmower **characterized in that** it comprises a hub blade assembly (1) according to any one of the preceding claims.

## Patentansprüche

1. Nabenklingenanordnung (1) für Rasenmäher, aufweisend eine Nabe (2), eine Klinge (3) und Verbindungseinrichtungen zum reversiblen Verbinden der Klinge (3) mit der Nabe (2), die mindestens ein zentrales Durchgangsloch (4) und mindestens zwei seitliche Löcher (5) aufweist, wobei die Verbindungseinrichtungen Kugeln (10) und Federn (11) beinhalten, die in die seitlichen Löcher (5) eingreifen können, sowie eine Schraube (8) beinhalten, die in das zentrale Durchgangsloch (4) eingreifen kann, wobei die Kugeln (10) aus einer unteren Öffnung (14) des jeweiligen seitlichen Lochs (5) hervorstehen können, um in reversibler Weise in Löcher (18) der Klinge (3) einzugreifen,
wobei die mindestens zwei seitlichen Löcher (5) Durchgangslöcher sind,
wobei die Verbindungseinrichtungen eine Schließeinrichtung (23) der seitlichen Löcher (5) aufweisen,
wobei jedes seitliche Loch (5) in der Lage ist, die Schließeinrichtung (23), eine Feder (11) und eine Kugel (10) reversibel aufzunehmen,
**dadurch gekennzeichnet,**
**dass** die Schließeinrichtung einen Hohlzylinder (23) aufweist, in dem ein geschlossener Hohlraum (19) sowohl die Feder (11) aus auch die Kugel (10) irreversibel aufnehmen kann, wobei der geschlossene Hohlraum (19) eine Öffnung (20) mit einer Verengung (22) aufweist, die das Austreten der Kugel (10) aus dem geschlossenen Hohlraum (19) verhindern kann und nur das Hervorstehen der Kugel (10) zulässt.

2. Nabenklingenanordnung (1) nach Anspruch 1,
**dadurch gekennzeichnet, dass** jedes seitliche Loch (5) einen mit Gewinde versehenen oberen Bereich (151) aufweist, in den der mit einem Außengewinde versehene Hohlzylinder (23) eingreift.

3. Rasenmäher,
**dadurch gekennzeichnet, dass** er eine Nabenklingenanordnung (1) nach einem der vorhergehenden Ansprüche aufweist.

## Revendications

1. Ensemble de pale de moyeu (1) pour une tondeuse à gazon, comprenant un moyeu (2), une pale (3) et des moyens de raccordement pour raccorder, de manière réversible, la pale (3) au moyeu (2) qui comprend au moins un trou débouchant central (4) et au moins deux trous latéraux (5), les moyens de raccordement comprennent des billes (10) et des ressorts (11) pouvant se mettre en prise dans lesdits trous latéraux (5) et une vis (8) pouvant se mettre en prise dans ledit trou débouchant central (4), lesdites billes (10) pouvant faire saillie d'une ouverture inférieure (14) du trou latéral (5) respectif pour se mettre en prise, de manière réversible, dans les trous (18) de la pale (3),
lesdits au moins deux trous latéraux (5) sont des trous débouchants,
les moyens de raccordement comprennent des moyens de fermeture (23) des trous latéraux (5),
chaque trou latéral (5) peut loger, de manière réversible, les moyens de fermeture (23), un ressort (11) et une bille (10),
**caractérisé en ce que** les moyens de fermeture comprennent un cylindre creux (23) dans lequel une cavité fermée (19) peut loger, de manière irréversible, à la fois le ressort (11) et la bille (10), ladite cavité fermée (19) ayant une ouverture (20) avec un rétrécissement (22) pouvant empêcher la sortie de la bille (10) de la cavité fermée (19) permettant uniquement la saillie de la bille (10).

2. Ensemble de pale de moyeu (1) selon la revendication 1, **caractérisé en ce que** chaque trou latéral (5) comprend une partie supérieure filetée (151) dans laquelle le cylindre creux (23), qui est extérieurement fileté, se met en prise.

3. Tondeuse à gazon **caractérisée en ce qu'**elle comprend un ensemble de pale de moyeu (1) selon l'une quelconque des revendications précédentes.
